# EUROPÄISCHE PATENTSCHRIFT

(11) **EP 3 922 488 B1**
(45) Veröffentlichungstag und Bekanntmachung des Hinweises auf die Patenterteilung: **23.08.2023**
(21) Anmeldenummer: 20178887.4
(22) Anmeldetag: 09.06.2020
(51) Int. Cl.: B60D 5/00, B61D 17/22

(54) **ÜBERGANG ZWISCHEN ZWEI MITTELS EINES GELENKS ODER EINER KUPPLUNG VERBUNDENEN FAHRZEUGTEILEN**
TRANSITION BETWEEN TWO VEHICLE PARTS CONNECTED BY MEANS OF A JOINT OR A COUPLING
TRANSITION ENTRE DEUX PIÈCES DE VÉHICULE RACCORDÉES AU MOYEN D'UNE ARTICULATION OU D'UN COUPLAGE

(43) Veröffentlichungstag der Anmeldung: 15.12.2021
(73) Patentinhaber: Hübner GmbH & Co. KG, 34123 Kassel (DE)
(72) Erfinder: Heiwig, Matthias, 34286 Spangenberg (DE)

(56) Entgegenhaltungen:
- EP-A1- 0 562 598
- EP-A1- 0 567 950
- EP-A1- 2 607 114
- WO-A1-2005/042329
- CA-A- 1 128 370
- CH-A- 415 309
- CN-Y- 2 419 125
- DE-A1-102015 214 747
- FR-A- 1 182 339
- GB-A- 2 009 691

## Beschreibung

Die Erfindung betrifft einen Übergang zur Anordnung zwischen zwei mittels eines Gelenks oder einer Kupplung verbundenen Fahrzeugteilen, insbesondere eines Schienenfahrzeugs oder eines Busses, mit den Merkmalen des Oberbegriffs von Anspruch 1. Weiterhin betrifft die Erfindung eine Anordnung eines solchen Übergangs auf einem Gelenk oder einer Kupplung sowie ein Fahrzeug mit zwei mittels eines Gelenks oder einer Kupplung verbundenen Fahrzeugteilen und mit einem solchen Übergang.

### STAND DER TECHNIK

Gliederbrücken sind aus dem Stand der Technik bekannt und dienen dem Überwechseln von Passagieren zwischen zwei miteinander verbundenen Fahrzeugteilen.

Aus der EP 0 583 491 B1 ist beispielsweise eine Gliederbrücke zwischen zwei gelenkig miteinander gekuppelten Fahrzeugen bekannt. Im Bereich des Bodens der gelenkig miteinander verbundenen Fahrzeugteile ist jeweils eine Einschuböffnung vorgesehen. Die Gliederbrücke ist dabei parallel zur Fahrzeuglängsachse beweglich in der Einschuböffnung gelagert. An jedem Ende der Gliederbrücke ist eine Blattfeder vorgesehen, die sich einerseits am Gehäuse des Fahrzeuges abstützt und zum anderen an der Gliederbrücke anliegt. Mittels einer Rückstellkraft der Blattfedern wird die Gliederbrücke zwischen den beiden Fahrzeugen zentriert. Durch die Blattfedern wird also dafür gesorgt, dass sich die Gliederbrücke bei Bewegung der beiden Fahrzeuge relativ zueinander in einer mittigen Position zwischen den beiden Fahrzeugteilen befindet. Dadurch wird sichergestellt, dass eine durchgängige Begehfläche ohne Spalt zwischen den Fahrzeugteilen geschaffen wird.

Wie bereits ausgeführt, ist die Gliederbrücke in der Einschuböffnung eines jeden Fahrzeugs längsbeweglich geführt. Hierdurch ist es möglich, dass bei Versatzbewegungen der beiden Fahrzeuge relativ zueinander, wie sie beispielsweise vorkommen, wenn die Fahrzeuge über eine S-förmige Weiche fahren, die Gliederbrücke dem hierbei auftretenden Bewegungsablauf nachgeben kann. Insbesondere ist festzustellen, dass eine Gliederbrücke eine Schrägstellung ermöglichen muss, das heißt, eine Auslenkung zur Längsachse des Fahrzeugs um 45° in einer Ebene der Gliederbrücke bewerkstelligen kann.

Abhängig von einer Fahrsituation, Auslenkung und anliegender Federkraft kann es dazu kommen, dass die Gliederbrücke nicht gänzlich mittig zwischen den Fahrzeugen zentriert ist. Ein Defekt oder eine Ermüdung der Blattfeder an einem Fahrzeugteil kann zu einer nicht gewünschten außermittigen Anordnung der Gliederbrücke zwischen den Fahrzeugen führen. Somit ist es erforderlich, die Gliederbrücke ausreichend lang auszugestalten und ausreichend tief in der Einschuböffnung anzuordnen, so dass eine Überlappung zwischen einem begehbaren Fahrzeugboden und der Begehfläche der Gliederbrücke durchgehend und ohne Spalt gewährleistet ist.

Zur Anordnung der Blattfedern in der Einschuböffnung ist jedoch weiterer Bauraum auf jeder Seite in der Einschuböffnung erforderlich. Dies erfordert Einschuböffnungen mit einer verhältnismäßig großen Bautiefe. Die Herstellung und eine Wartung eines Übergangs der vorgenannten Art sind aufwändig und kostenintensiv, insbesondere da die Blattfedern im eingebauten Zustand nicht einfach zugänglich sind.

Aus dem Dokument GB 2 009 691 A ist ein Übergang bekannt, bei dem als Übergangsplattform keine Gliederbrücke zum Einsatz kommt. Vielmehr werden Brückenbleche verwendet. Für jede Übergangshälfte ist dazu ein Paar von Brückenblechen vorgesehen. Eines der Brückenbleche ist stirnseitig am Wagenkasten befestigt. Das andere Brückenblech ist am Mittelrahmen der Übergangshälfte befestigt und erstreckt sich in Durchgangsrichtung gesehen bis über das wagenseitig befestigte Brückenblech, sodass auch bei Relativbewegungen der benachbarten Fahrzeugteile eine durchgehende, begehbare Fläche gebildet wird.

Aus dem Dokument EP 0 562 598 A1 ist ein Drehkranzgelenk zur gelenkigen Verbindung der Fahrzeugteile eines Gelenkbusses bekannt. Oberhalb des Drehkranzgelenks ist eine Übergangsbrücke in Form einer Übergangsplatte vorgesehen, welche an dem Vorderfahrzeug mittels einer Gummiplatte scharnierartig befestigt ist und gegenüber dem Hinterwagen verschieblich abgestützt ist, so dass horizontale Schiebebewegungen der Übergangsplatte gegenüber der Bodenfläche des Hinterwagens möglich sind.

Des Weiteren wird auf die CH 627 981 A5 verwiesen, die zwei an jeweils miteinander verbundenen Fahrzeugteilen befestigte Übergangsbrücken aufweist, die im verbundenen Zustand der Fahrzeugteile an einer Trennebene aneinander anliegen.

### OFFENBARUNG DER ERFINDUNG

Aufgabe der Erfindung ist die Weiterbildung und Verbesserung eines Übergangs zur Anordnung zwischen zwei mittels eines Gelenks oder einer Kupplung verbundenen Fahrzeugteilen mit einer Gliederbrücke zur Bildung einer Begehfläche zwischen den Fahrzeugteilen. Insbesondere soll der Übergang kompakt, kostengünstig, einfach in der Wartung sowie sicher und zuverlässig sein.

Diese Aufgabe wird ausgehend von einem Übergang gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Gliederbrücke mit dem Gelenk oder der Kupplung derart verbindbar ist, dass eine Bewegung der Gliederbrücke zwischen den Fahrzeugteilen durch das Gelenk oder die Kupplung geführt ist.

Der Fall einer Kupplung betrifft vor allem Schienenfahrzeuge. Ein Gelenk kommt hingegen vor allem bei Straßenfahrzeugen wie Gelenkbussen zum Einsatz. Der Fall eines Gelenks kann aber auch auf Schienenfahrzeuge zutreffen, z. B. im Fall einer Straßenbahn.

Kerngedanke der Erfindung ist es, die Gliederbrücke mit dem Gelenk oder der Kupplung, das/die zwischen den Fahrzeugteilen angeordnet ist, zu verbinden und dadurch eine stets mittige Anordnung der Gliederbrücke zwischen den beiden Fahrzeugteilen zu gewährleisten. Es soll damit erreicht werden, dass die Gliederbrücke über das Gelenk oder der Kupplung zwischen den Fahrzeugteilen geführt und/oder zentriert wird. Dabei ist die Gliederbrücke mit dem Gelenk oder der Kupplung derart verbindbar, dass eine geführte Mitnahme der Gliederbrücke insbesondere in Fahrtrichtung erfolgt. Ein weiterer Gedanke der Erfindung ist es, dass die Gliederbrücke auf dem Gelenk oder der Kupplung in Schwerkraftrichtung abgestützt ist und dadurch auch größere Abstände zwischen den Fahrzeugteilen mit der Gliederbrücke überbrückt werden können, ohne die Gliederbrücke übermäßig massiv konstruieren zu müssen.

Der Übergang weist erfindungsgemäß einen geschlossen umlaufenden Mittelrahmen zur Aufnahme eines Balges auf, wobei am Mittelrahmen zu beiden Seiten hin jeweils ein geschlossen umlaufender Balg befestigt ist. Dabei sieht die Erfindung vor, dass die Gliederbrücke mit dem Mittelrahmen gekoppelt ist und/oder der Mittelrahmen mit dem Gelenk bzw. der Kupplung gekoppelt ist. Mithin ist also die Gliederbrücke mithilfe des Mittelrahmens mit dem Gelenk koppelbar und/oder mit anderen Worten ist die Gliederbrücke durch den Mittelrahmen hindurch mit dem Gelenk koppelbar, insbesondere durch den Bodenbereich des Mittelrahmens hindurch.

Gemäß einer Ausführungsform weist der Übergang eine Aufnahmevorrichtung auf zur Verbindung der Gliederbrücke mit dem Gelenk oder der Kupplung. Dadurch wird gewährleistet, dass die Verbindung zwischen der Gliederbrücke und der Aufnahmevorrichtung und so dem Gelenk bzw. der Kupplung besonders einfach herzustellen ist. Durch die Aufnahmevorrichtung wird die Position der Gliederbrücke in Durchgangsrichtung des Übergangs vorgegeben, welche insbesondere mit der Verbindungsachse der beiden Fahrzeugteile zusammenfällt. Die Aufnahmevorrichtung kann direkt an der Gliederbrücke oder an dem Mittelrahmen angeordnet sein.

Konkret kann die Gliederbrücke wenigstens einen Bolzen aufweisen, wobei die Aufnahmevorrichtung wenigstens eine Tasche aufweist. Eine Verbindung wird dabei durch eine insbesondere in Querrichtung quer zur Durchgangsrichtung des Übergangs geführte Anordnung des Bolzens in der Tasche geschaffen. Insbesondere wird der Bolzen in die Tasche von einer Oberseite mit der Schwerkraft herabgesenkt und durch die Schwerkraft insofern in der Tasche gehalten, wobei der Bolzen in Querrichtung in der Tasche beweglich ist. Umgekehrt kann aber auch die Gliederbrücke eine Tasche aufweisen, in die ein von der Aufnahmevorrichtung oder dem Mittelrahmen ausgebildeter Bolzen eingreift. Eine solche Bolzen-Taschen-Verbindung hat den Vorteil, dass sie zuverlässig sowie einfach herzustellen und ebenso einfach zu lösen ist. Zudem kann die Gliederbrücke einen Querversatz der Fahrzeugteile zueinander auch während der Fahrt ausgleichen. Insbesondere wird auch bei Kipp-, Wank- und Knickbewegungen zwischen den Fahrzeugteilen die Verbindung zuverlässig beibehalten. Die Verbindung mit Bolzen und Tasche erlaubt eine Beweglichkeit der Gliederbrücke relativ zu der Aufnahmevorrichtung, wodurch eine übermäßige Beanspruchung der Bauteile des Übergangs vermieden werden kann.

Wenn die Gliederbrücke mindestens zwei Brückenteile aufweist, wobei jedes Brückenteil einem jeweiligen Fahrzeugteil zugeordnet ist, kann jedes Brückenteil mit dem Gelenk bzw. der Kupplung verbunden sein. Dadurch wird die Gliederbrücke als Bauteil einfacher handhabbar und kann insofern auch einfacher eingebaut und wieder entnommen werden, da statt einer Gliederbrücke mit großen Abmessungen zwei baugleiche Brückenteile hergestellt und eingebaut werden können. Weiterhin wird durch die zweiteilige Gliederung der Gliederbrücke ein Trennen der beiden Fahrzeugteile vereinfacht, indem jedes Brückenteil an dem jeweiligen Fahrzeugteil verbleibt. Weiterhin ist ein Zugang zu dem Gelenk bzw. der Kupplung und/oder eine vereinfachte Reinigung des Balges gewährleistet z. B. durch Herausnehmen oder Hochklappen der Brückenteile am jeweiligen Fahrzeugteil.

In weiterer Ausgestaltung kann jedes Brückenteil jeweils mittels eines Bolzens in einer jeweiligen Tasche der Aufnahmevorrichtung aufgenommen sein. Dadurch wird jedes Brückenteil unabhängig von dem anderen Brückenteil austauschbar.

Erfindungsgemäß kann der Bolzen jede beliebige Form haben. Vorzugsweise weist der Bolzen und insbesondere der Abschnitt, der in der Tasche aufgenommen wird, eine ballige Form und/oder Tonnenform auf. Durch diese Form kann der Bolzen in die Tasche der Aufnahmevorrichtung auf einfache Weise eingeführt werden. Weiterhin wird durch die (zumindest abschnittsweise) ballige Form oder Tonnenform des Bolzens eine Beweglichkeit des Bolzens in der Tasche gewährleistet ähnlich wie bei einer gelenkigen Aufnahme. Dadurch können bei Wank- und Nickbewegungen zwischen den Fahrzeugteilen mechanische Spannungen und Schäden an den Bauteilen des Übergangs verhindert werden, da der Bolzen mittels seiner Balligkeit bzw. Tonnenform die Bewegungen der Fahrzeugteile zueinander und damit auch die Bewegungen der Brückenteile der Gliederbrücke relativ zur Aufnahmevorrichtung ausgleichen kann.

Die Aufnahmevorrichtung kann an dem Mittelrahmen befestigt sein. Der Mittelrahmen kann insbesondere einen den Übergang umschließenden Stützrahmen bilden, an dem ein Balg des Übergangs angebracht ist. Der Balg kann dabei an den dem Mittelrahmen abgewandten Enden an dem jeweiligen Fahrzeugteil angebracht sein. Dadurch wird ein zur Außenseite abgegrenzter Übergang mit einem geschlossenen Innenraum gebildet. Der Mittelrahmen dient der Befestigung der Balghälften des Balges mittig zwischen den Fahrzeugteilen und verhindert damit ein übermäßiges Durchhängen des Balges. Durch das Befestigen der Aufnahmevorrichtung an dem Mittelrahmen wird sichergestellt, dass die Gliederbrücke eine gewünschte Position relativ zu dem Mittelrahmen mit dem Balg hat.

Gemäß einer Ausführungsform weist der Mittelrahmen ein U-Profil auf, welches auf einer Gleitleiste angeordnet ist, die an dem Gelenk oder der Kupplung angeordnet ist. Die Gleitleiste dient der Abstützung des Mittelrahmens und zudem der Führung einer Bewegung des Mittelrahmens mit der Aufnahmevorrichtung und der Gliederbrücke relativ zu dem Gelenk bzw. der Kupplung.

Die Gleitleiste gewährleistet somit, dass sich die Gliederbrücke und der Mittelrahmen mit dem Balg entgegen der Schwerkraft auf dem Gelenk bzw. der Kupplung abstützen können. Gleichzeitig wird erreicht, dass der Mittelrahmen und die Gliederbrücke in Durchgangsrichtung zusammen mit dem Mittelrahmen und dem daran befestigten Balg zwischen den Fahrzeugteilen zentriert gehalten und bei deren Relativbewegungen mitgenommen werden. Dabei ist ein Gleiten des Mittelrahmens mit dem U-Profil entlang der Gleitleiste in einer Richtung quer zur Durchgangsrichtung ermöglicht. Insbesondere wird in dynamischen Fahrsituationen wie Kurven oder S-Bögen, wie sie beispielsweise an Weichen auftreten, eine Ausrichtung und Positionierung der Gliederbrücke relativ zu den Fahrzeugteilen gewährleistet.

An ihren jeweiligen fahrzeugseitigen Enden weist die Gliederbrücke vorzugsweise Schlitten zum Abstützen und Abgleiten auf oder in den Fahrzeugteilen auf. Diese können dabei so ausgebildet sein, wie dies grundsätzlich aus dem Dokument EP 0 583 491 B1 bekannt ist.

Mittels der Schlitten kann sich die Gliederbrücke insgesamt an drei Punkten, insbesondere den Fahrzeugteilen sowie dem Gelenk bzw. der Kupplung, abstützen, womit insbesondere auch bei langen Gliederbrücken eine gute Abstützung und somit eine gute Belastbarkeit im Betrieb erreicht werden kann. Außerdem wird durch die Schlitten und durch die Verbindung der Schlitten mit den Fahrzeugteilen eine Ausrichtung der Gliederbrücke relativ zu den jeweiligen Fahrzeugteilen ermöglicht, insbesondere bei einer Relativbewegung der Fahrzeugteile zueinander. Bevorzugt können die Schlitten in einer Aufnahmeschiene am Fahrzeugteil geführt sein.

Die erfindungsgemäße Aufgabe wird ferner auch durch eine Anordnung eines erfindungsgemäßen Übergangs auf einem Gelenk oder einer Kupplung erreicht, mittels dem/der zwei beweglich miteinander verbundene Fahrzeugteile verbunden sind. D. h. der Übergang ist in erfindungsgemäßer Weise mit dem Gelenk bzw. der Kupplung verbunden, so dass eine Bewegung der Gliederbrücke zwischen den Fahrzeugteilen durch das Gelenk oder die Kupplung geführt ist.

Der Erfindungsgedanke umfasst weiterhin ein Fahrzeug, insbesondere ein Schienenfahrzeug oder einen Bus, mit zwei mittels eines Gelenks oder einer Kupplung verbundenen Fahrzeugteilen und mit einem Übergang mit den vorstehend ausgeführten Merkmalen. Ein solches Fahrzeug kann ein Schienenfahrzeug, beispielsweise eine Straßenbahn oder ein Zug sein. Ein solches Fahrzeug kann auch ein Gelenkbus sein.

Hinsichtlich bevorzugter Ausführungsformen der erfindungsgemäßen Anordnung bzw. dem erfindungsgemäßen Fahrzeug gelten die Ausführungen zu dem erfindungsgemäßen Übergang entsprechend.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der

Figuren näher dargestellt. Es zeigt:
- Figur 1: in perspektivischer Ansicht einen Übergang mit einer Gliederbrücke, einem Mittelrahmen und mit einem daran befestigten Balg,
- Figur 2: in einer geschnittenen Seitenansicht den Übergang mit der Gliederbrücke, die durch eine Aufnahmevorrichtung mit einer Kupplung verbunden ist und
- Figur 3: in einer geschnittenen Detailansicht gemäß Fig. 2 die Gliederbrücke mit zwei Brückenteilen.

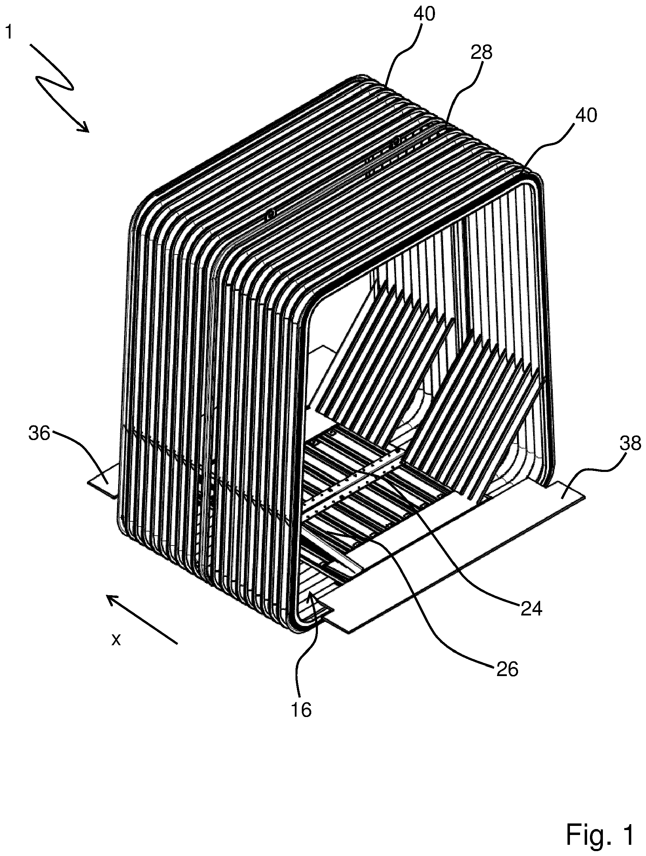

Die Fig. 1 zeigt in einer perspektivischen Ansicht einen Übergang zwischen zwei mittels eines Gelenks oder einer Kupplung verbundenen Fahrzeugteilen. Dabei ist eine Gliederbrücke 16 mit einem ersten Brückenteil 24 und einem zweiten Brückenteil 26 zwischen den Fahrzeugteilen angeordnet. Zur Bildung einer Begehfläche liegen Bodenklappen 36, 38 der nicht näher gezeigten Fahrzeugteile jeweils auf dem ersten Brückenteil 24 bzw. dem zweiten Brückenteil 26 auf. Dabei überlappen die Bodenklappen 36, 38 sich mit der Gliederbrücke 16 in einer Durchgangsrichtung x, so dass eine durchgängige Begehfläche zwischen den Fahrzeugteilen 12, 14 geschaffen ist. Die Bodenklappen 36, 38 gehören jeweils zu den Fahrzeugteilen 12, 14 und können manuell hochgeklappt werden.

Ein Mittelrahmen 28 umgibt die Gliederbrücke 16. An dem geschlossen umlaufenden Mittelrahmen 28 ist zu beiden Seiten hin jeweils ein ebenfalls geschlossen umlaufender Balg 40 befestigt, der die Gliederbrücke 16 ebenfalls umspannt und an dem jeweiligen Fahrzeugteil befestigbar ist. Somit ist ein tunnelartiger Durchgang mit einem geschlossenen, mittels der Gliederbrücke 16 begehbaren Innenraum zwischen den Fahrzeugteilen 12,14 gebildet.

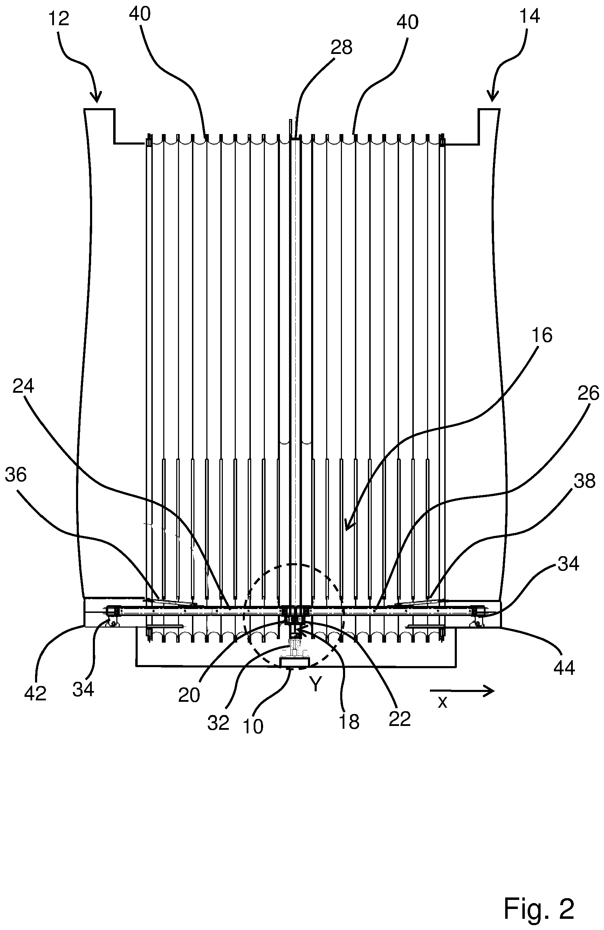

Fig. 2 zeigt in einer seitlichen Schnittdarstellung die Gliederbrücke 16 mit dem ersten Brückenteil 24 und dem zweiten Brückenteil 26. An jeweiligen fahrzeugseitigen Enden sind die Brückenteile 24, 26 in Einschuböffnungen 42, 44 der Fahrzeugteile 12, 14 angeordnet. Dabei sind sie durch an den Brückenteilen 24, 26 angeordnete Schlitten 34 beweglich in den Einschuböffnungen 42, 44 aufgenommen. Eine Bewegung der Schlitten 34 ist dabei in Durchgangsrichtung x geführt.

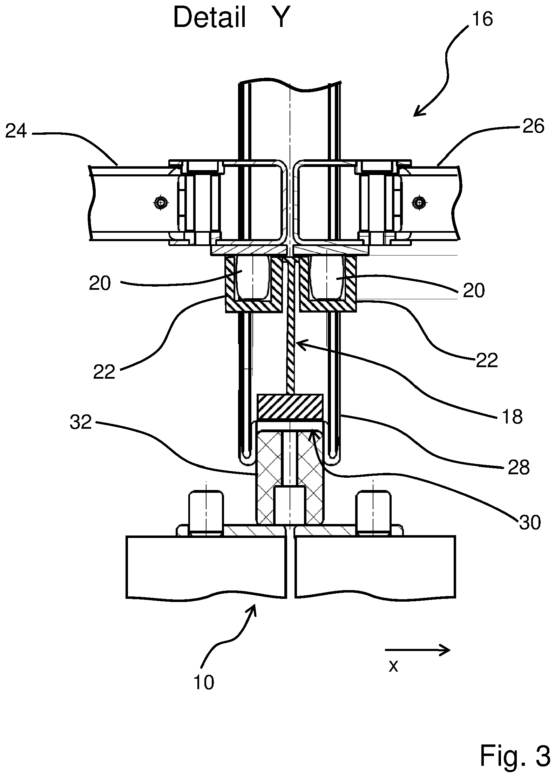

An den dem Schlitten 34 gegenüberliegenden Enden der Brückenteile 24, 26 weisen diese jeweils einen Bolzen 20 auf. Die Bolzen 20 sind in Taschen 22 einer Aufnahmevorrichtung 18 aufgenommen, was in der in Fig. 3 gezeigten Detailansicht weiter veranschaulicht ist.

Die Aufnahmevorrichtung 18 ist innenseitig mit dem Mittelrahmen 28 verbunden. Der Mittelrahmen 28 ist wiederum mit seiner Außenseite auf einer Gleitleiste 32 aufliegend angeordnet. Die Gleitleiste 32 selbst ist oberseitig an einer Kupplung 10 angeordnet und damit zum Mittelrahmen 28 und insofern auch zur Aufnahmevorrichtung 18 weisend ausgerichtet. Die Kupplung 10 verbindet die Fahrzeugteile 12, 14 miteinander. Die Brückenteile 24, 26 stützen sich somit außenseitig mittels der Schlitten auf dem jeweiligen Fahrzeugteil 12, 14 ab. Weiterhin stützen sich die Brückenteile 24, 26 innseitig jeweils mittels der Aufnahmevorrichtung 18, des Mittelrahmens 28 und der Gleitleiste 32 auf der Kupplung10 ab.

Bei Relativbewegungen der Fahrzeugteile 12,14 zueinander, wie sie beispielsweise bei einer Fahrt über eine S-förmige Weiche auftreten, kommt es zu einer Auslenkung der Gliederbrücke 16 in der Ebene der Begehfläche der Gliederbrücke 16. Dabei kommt es zu einer parallelogrammartigen Verschiebung der Gliederbrücke 16 in der Begehebene. Zum kinematischen Ausgleich und insofern zur Ermöglichung dieser Verschiebung wird die Gliederbrücke 16 mittels des Bolzens 20 in der Tasche 22 der Aufnahmevorrichtung 18 über der Kupplung 10 gehalten und hinsichtlich der Relativbewegung der beiden Fahrzeugteile 12, 14 mitgenommen.

Wie aus der Detailansicht in Fig. 3 deutlich wird, sind die Bolzen 20 bei beiden Brückenteilen 24, 26 jeweils ballig ausgeführt und die Bolzens 20 sind in jeweils zugeordneten Taschen 22 der Aufnahmevorrichtung 18 aufgenommen. Die Unterseiten der Brückenteile 24, 26 liegen dabei auf der Aufnahmevorrichtung auf.

Die Brückenteile 24, 26 liegen bündig aneinander an und bilden eine durchgängige, im Wesentlichen ebene und spaltfreie Begehfläche zum Überwechseln zwischen den Fahrzeugteilen. Die Aufnahmevorrichtung 18 ist an dem Mittelrahmen 28 befestigt, sodass die Aufnahmevorrichtung 18 einer Bewegung des Mittelrahmens 28 folgt.

Der Mittelrahmen 28 weist auf seiner der Kupplung 10 zugewandten Seite ein U-förmiges Profil 30 auf. Der Mittelrahmen 28 liegt auf der Gleitleiste 32 an der Kupplung 10 auf, wobei die Gleitleiste 32 in dem U-förmigen Profil 30 senkrecht zur Bildebene geführt aufgenommen ist. Mittels einer formschlüssigen Verbindung zwischen dem U-Profil 30 und der Gleitleiste 32 sowie mittels der Bolzen 20 in den Taschen 22 werden die Brückenteile 24, 26 in Durchgangsrichtung x bei einer Relativbewegung der Fahrzeugteile mitgenommen und über der Kupplung 10 gehalten. Die Gliederbrücke 16 wird somit in Durchgangsrichtung x stets zentriert zwischen den Fahrzeugteilen über der Kupplung 10 gehalten.

Der Mittelrahmen 28 ist auf der Gleitleiste 32 in einer Ebene der Begehfläche vertikal zu der Fahrtrichtung x beweglich aufgenommen. Dabei ist eine Bewegung quer zu der Durchgangsrichtung x durch das U-förmige Profil 30 des Mittelrahmens und der darin hineinragenden Gleitleiste 32 geführt. Dadurch ist insbesondere bei Kurven- und S-Bogenfahrten ein Ausweichen und Verschieben des Mittelrahmens 28 mit der Aufnahmevorrichtung 18 und der daran gehaltenen Gliederbrücke 16 möglich. Insbesondere wird dadurch sichergestellt, dass der Mittelrahmen 28 mit dem Balg 40 und die Gliederbrücke 16 zusammen eine Bewegung vollziehen. Ein Anschlagen des Balges 40 oder des Mittelrahmens 28 an die Gliederbrücke 16 wird dadurch verhindert. Weiterhin wird sichergestellt, dass der Mittelrahmen 28 mit dem Balg 40 und die Gliederbrücke 28 gemeinsam eine zweckmäßige Ausrichtung gegenüber den Fahrzeugteilen aufweisen.

Durch die Balligkeit der Bolzen 20 ist eine Verbindung mit einer gewissen Beweglichkeit verwirklicht. Insbesondere sind so Ausgleichsbewegungen, wie z. B. ein Kippen oder Neigen, zwischen der Aufnahmevorrichtung 18 und den Brückenteilen 24, 26 bei Kipp-, Wank- und Knickbewegungen zwischen den Fahrzeugteilen möglich.

Die Erfindung beschränkt sich in ihrer Ausführung nicht lediglich auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht, vorausgesetzt, dass diese Varianten unter dem Schutzumfang der beiliegenden Ansprüche fallen.

Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Übergang
- 10: Gelenk
- 12: Fahrzeugteil
- 14: Fahrzeugteil
- 16: Gliederbrücke
- 18: Aufnahmevorrichtung
- 20: Bolzen
- 22: Tasche
- 24: Brückenteil
- 26: Brückenteil
- 28: Mittelrahmen
- 30: U-Profil
- 32: Gleitleiste
- 34: Schlitten
- 36: Bodenklappe
- 38: Bodenklappe
- 40: Balg
- 42: Einschuböffnung
- 44: Einschuböffnung

- x: Durchgangsrichtung

## Patentansprüche

1. Übergang (1) zur Anordnung zwischen zwei mittels eines Gelenks oder einer Kupplung (10) verbundenen Fahrzeugteilen (12,14), insbesondere eines Schienenfahrzeugs oder eines Busses, mit einer Gliederbrücke (16) zur Bildung einer Begehfläche zwischen den Fahrzeugteilen (12,14),
**dadurch gekennzeichnet, dass**
die Gliederbrücke (16) mit dem Gelenk oder der Kupplung (10) derart verbindbar ist, dass eine Bewegung der Gliederbrücke (16) zwischen den Fahrzeugteilen (12,14) durch das Gelenk oder die Kupplung (10) geführt ist und der Übergang (1) einen geschlossen umlaufenden Mittelrahmen (28) zur Aufnahme eines Balges (40) aufweist, wobei am Mittelrahmen (28) zu beiden Seiten hin jeweils ein geschlossen umlaufender Balg (40) befestigt und die Gliederbrücke (16) mit dem Mittelrahmen (28) gekoppelt ist.

2. Übergang (1) nach Anspruch 1,
**dadurch gekennzeichnet, dass**
der Mittelrahmen (28) mit dem Gelenk oder der Kupplung (10) koppelbar ist zur Herstellung einer Verbindung der Gliederbrücke (16) mit dem Gelenk oder der Kupplung (10).

3. Übergang (1) nach einem der vorhergehenden Ansprüche,
**dadurch gekennzeichnet, dass**
die Gliederbrücke (16) mittels einer Aufnahmevorrichtung (18) mit dem Gelenk oder der Kupplung (10) verbindbar ist.

4. Übergang (1) nach Anspruch 3,
**dadurch gekennzeichnet, dass**
die Aufnahmevorrichtung (18) an dem Mittelrahmen (28) angeordnet ist.

5. Übergang (1) nach Anspruch 3 oder 4,
**dadurch gekennzeichnet, dass**
die Gliederbrücke (16) wenigstens einen Bolzen (20) aufweist und die Aufnahmevorrichtung (18) wenigstens eine Tasche (22) aufweist, wobei der Bolzen (20) in der Tasche (22) geführt aufgenommen ist.

6. Übergang (1) nach einem der vorhergehenden Ansprüche,
**dadurch gekennzeichnet, dass**
die Gliederbrücke (16) zwei Brückenteile (24,26) umfasst, wobei jedes Brückenteil (24,26) einem jeweiligen Fahrzeugteil (12,14) zugeordnet ist und wobei jedes Brückenteil (24,26) selbstständig mit dem Gelenk oder der Kupplung (10) verbindbar ist.

7. Übergang (1) nach Anspruch 5 oder 6,
**dadurch gekennzeichnet, dass**
die Brückenteile (24,26) jeweils mittels eines Bolzens (20) in einer jeweiligen Tasche (22) der Aufnahmevorrichtung (18) aufgenommen sind.

8. Übergang (1) nach einem der Ansprüche 5 bis 7,
**dadurch gekennzeichnet, dass**
der Bolzen (20) ballig ausgestaltet ist und/oder eine Tonnenform aufweist.

9. Übergang (1) nach einem der Ansprüche 1 bis 8,
**dadurch gekennzeichnet, dass**
der Mittelrahmen (28) mit einem nach unten zu dem Gelenk oder der Kupplung (10) hin geöffneten U-Profil (30) ausgebildet ist, in dem eine an dem Gelenk oder der Kupplung (10) angeordnete Gleitleiste (32) derart aufnehmbar ist, dass der Mittelrahmen (28) mit der Aufnahmevorrichtung (18) und der Gliederbrücke (16) auf dem Gelenk oder der Kupplung (10) abgestützt und/oder eine Bewegung des Mittelrahmens (28) mit der Aufnahmevorrichtung (18) und der Gliederbrücke (16) relativ zu dem Gelenk oder der Kupplung (10) geführt wird.

10. Übergang (1) nach einem der vorhergehenden Ansprüche,
**dadurch gekennzeichnet, dass**
die Gliederbrücke (16) an jeder fahrzeugseitigen Endseite einen Schlitten (34) zum Abstützen und Abgleiten auf oder in den Fahrzeugteilen (12,14) aufweist.

11. Anordnung, bestehend aus einem Übergang (1) nach einem der vorhergehenden Ansprüche und einem Gelenk oder einer Kupplung (10) zur Verbindung von zwei beweglich miteinander verbundenen Fahrzeugteilen (12, 14).

12. Fahrzeug, insbesondere Schienenfahrzeug oder Bus, mit zwei mittels eines Gelenks oder einer Kupplung (10) verbundenen Fahrzeugteilen (12,14) und mit einem Übergang (1) zwischen den Fahrzeugteilen (12, 14) gemäß einem der vorangehenden Ansprüche.

## Claims

1. Transition (1) for arrangement between two vehicle parts (12, 14) which are connected by means of a joint or a coupling (10), in particular of a rail vehicle or a bus, the transition comprising a linking bridge (16) for forming a walking surface between the vehicle parts (12, 14),
**characterized in that**
the linking bridge (16) can be connected to the joint or the coupling (10) in such a way that a movement of the linking bridge (16) between the vehicle parts (12, 14) is guided through the joint or the coupling (10) and the transition (1) has a centrally extending central frame (28) for receiving a bellows (40), a closed circumferential bellows (40) being attached to the central frame (28) on both sides and the linking bridge (16) being coupled to the central frame (28).

2. Transition (1) according to claim 1,
**characterized in that**
the central frame (28) can be coupled to the joint or the coupling (10) in order to produce a connection between the linking bridge (16) and the joint or the coupling (10).

3. Transition (1) according to either of the preceding claims,
**characterized in that**
the linking bridge (16) can be connected to the joint or the coupling (10) by means of a receiving device (18).

4. Transition (1) according to claim 3,
**characterized in that**
the receiving device (18) is arranged on the central frame (28).

5. Transition (1) according to either claim 3 or claim 4,
**characterized in that**
the linking bridge (16) has at least one bolt (20) and the receiving device (18) has at least one recess (22), the bolt (20) being received in the recess (22).

6. Transition (1) according to any of the preceding claims,
**characterized in that**
the linking bridge (16) comprises two platform parts (24, 26), each platform part (24, 26) being assigned to a relevant vehicle part (12, 14), and it being possible for each platform part (24, 26) to be independently connected to the joint or the coupling (10).

7. Transition (1) according to either claim 5 or claim 6,
**characterized in that**
the platform parts (24, 26) are each received by means of a bolt (20) in a relevant recess (22) of the receiving device (18).

8. Transition (1) according to any of claims 5 to 7,
**characterized in that**
the bolt (20) is convex and/or has a barrel shape.

9. Transition (1) according to any of claims 1 to 8,
**characterized in that**
the central frame (28) is formed having a U-shaped profile (30) which is open downward toward the joint or the coupling (10) and in which a sliding strip (32) arranged on the joint or the coupling (10) can be received in such a way that the central frame (28) having the receiving device (18) and the linking bridge (16) is supported on the joint or the coupling (10) and/or a movement of the central frame (28) having the receiving device (18) and the linking bridge (16) is guided relative to the joint or the coupling (10).

10. Transition (1) according to any of the preceding claims,
**characterized in that**
the linking bridge (16) has a carriage (34) on each vehicle-side end side for supporting and sliding on or in the vehicle parts (12, 14).

11. Arrangement consisting of a transition
(1) according to any of the preceding claims,
and
a joint or a coupling (10) for connecting two movably connected vehicle parts (12, 14).

12. Vehicle, in particular a rail vehicle or bus, comprising two vehicle parts (12, 14) which are connected by means of a joint or a coupling (10), and comprising a transition (1) between the vehicle parts (12, 14) according to any of the preceding claims.

## Revendications

1. Élément de jonction (1) destiné à être disposé entre deux parties de véhicule (12, 14) reliées au moyen d'une articulation ou d'un accouplement (10), en particulier d'un véhicule ferroviaire ou d'un bus, comportant une passerelle articulée (16) pour la formation d'une surface de circulation entre les parties de véhicule (12, 14),
**caractérisé en ce que**
la passerelle articulée (16) peut être reliée à l'articulation ou à l'accouplement (10) de telle manière qu'un déplacement de la passerelle articulée (16) entre les parties de véhicule (12, 14) est guidé par l'articulation ou l'accouplement (10) et l'élément de jonction (1) présente un cadre central (28) circonférentiel fermé pour la réception d'un soufflet (40), respectivement un soufflet (40) circonférentiel fermé étant fixé des deux côtés sur le cadre central (28) et la passerelle articulée (16) étant accouplée au cadre central (28).

2. Élément de jonction (1) selon la revendication 1,
**caractérisé en ce que**
le cadre central (28) peut être accouplé à l'articulation ou à l'accouplement (10) pour la création d'une liaison de la passerelle articulée (16) à l'articulation ou à l'accouplement (10).

3. Élément de jonction (1) selon l'une des revendications précédentes,
**caractérisé en ce que**
la passerelle articulée (16) peut être reliée à l'articulation ou à l'accouplement (10) au moyen d'un dispositif de réception (18).

4. Élément de jonction (1) selon la revendication 3,
**caractérisé en ce que**
le dispositif de réception (18) est disposé sur le cadre central (28).

5. Élément de jonction (1) selon la revendication 3 ou 4,
**caractérisé en ce que**
la passerelle articulée (16) présente au moins un boulon (20) et le dispositif de réception (18) présente au moins une poche (22), le boulon (20) étant reçu de manière guidée dans la poche (22).

6. Élément de jonction (1) selon l'une des revendications précédentes,
**caractérisé en ce que**
la passerelle articulée (16) comprend deux parties de passerelle (24, 26), une partie de véhicule (12, 14) respective étant associée à chaque partie de passerelle (24, 26) et chaque partie de passerelle (24, 26) pouvant être reliée de manière indépendante à l'articulation ou à l'accouplement (10).

7. Élément de jonction (1) selon la revendication 5 ou 6,
**caractérisé en ce que**
les parties de passerelle (24, 26) sont reçues respectivement au moyen d'un boulon (20) dans une poche (22) respective du dispositif de réception (18).

8. Élément de jonction (1) selon l'une des revendications 5 à 7,
**caractérisé en ce que**
le boulon (20) est conçu sous forme bombée et/ou présente une forme de tonneau.

9. Élément de jonction (1) selon l'une des revendications 1 à 8,
**caractérisé en ce que**
le cadre central (28) est réalisé avec un profil en U (30) ouvert vers le bas vers l'articulation ou l'accouplement (10), dans lequel profil une barre de glissement (32) disposée sur l'articulation ou l'accouplement (10) peut être reçue de telle manière que le cadre central (28) est en appui avec le dispositif de réception (18) et la passerelle articulée (16) sur l'articulation ou l'accouplement (10) et/ou un déplacement du cadre central (28) par rapport à l'articulation ou l'accouplement (10) est guidé avec le dispositif de réception (18) et la passerelle articulée (16).

10. Élément de jonction (1) selon l'une des revendications précédentes,
**caractérisé en ce que**
la passerelle articulée (16) présente, au niveau de chaque côté d'extrémité côté véhicule, un chariot (34) pour l'appui et le glissement sur ou dans les parties de véhicule (12, 14).

11. Agencement, composé d'un élément de jonction (1) selon l'une des revendications précédentes
et
d'une articulation ou d'un accouplement (10) pour la liaison de deux parties de véhicule (12, 14) reliées l'une à l'autre de manière mobile.

12. Véhicule, en particulier véhicule ferroviaire ou bus, comportant deux parties de véhicule (12, 14) reliées au moyen d'une articulation ou d'un accouplement (10) et comportant un élément de jonction (1) entre les parties de véhicule (12, 14) selon l'une des revendications précédentes.
